# EUROPÄISCHE PATENTSCHRIFT

(11) **EP 0 992 562 B1**
(45) Veröffentlichungstag und Bekanntmachung des Hinweises auf die Patenterteilung: **02.04.2003**
(21) Anmeldenummer: 99118750.1
(22) Anmeldetag: 23.09.1999
(51) Int. Cl.: C09K 3/18

(54) **Enteisungsmittel enthaltend Natriumformiat und Natriumchlorid und seine Verwendung**
De-icing composition comprising sodium formate and sodium chloride and its use
Composition dégivrante comprenant formiate de sodium et chlorure de sodium et son utilisation

(30) Priorität: 02.10.1998 DE 19845490
(43) Veröffentlichungstag der Anmeldung: 12.04.2000
(73) Patentinhaber: Clariant GmbH, 65929 Frankfurt am Main (DE)
(72) Erfinder: Dietl, Dr. Harald Artur, 84556 Kastl (DE); Stankowiak, Achim, Dr., 84503 Altötting (DE)

(56) Entgegenhaltungen:
- US-A- 4 388 203
- US-A- 4 664 832
- US-A- 4 746 449

## Beschreibung

Die vorliegende Erfindung betrifft ein Verfahren zum Schmelzen von Schnee und/oder Eis auf Verkehrsflächen durch Aufbringen eines Enteisungsmittels enthaltend ein Kompaktat aus Natriumformiat und Natriumchlorid. Weiterhin betrifft die Erfindung einen verbesserten Korrosionsschutz für Stahl und verzinkten Stahl.

Schnee und/oder Eis auf Straßen, Radfahrwegen, Gehwegen, Brücken, Sportplätzen, Flugplätzen und dergleichen, im folgenden Verkehrsflächen genannt, führen zu einer wesentlichen Beeinträchtigung des Verkehrsablaufs und der Verkehrssicherheit. Es ist deshalb schon seit langem bekannt, auf solche Flächen wasserlösliche Salze (Enteisungsmittel) aufzubringen, wobei Eis und Schnee schmilzt (auftaut) und eine wäßrige Lösung des Salzes mit entsprechend erniedrigtem Gefrierpunkt gebildet wird.

Die Forderungen, die ein Enteisungsmittel erfüllen sollte, sind sehr vielseitig. Die Materialien, aus denen die in Rede stehenden Flächen aufgebaut sind, beispielsweise Beton, dürfen durch das Enteisungsmittel nicht beschädigt oder gar zersetzt werden. Wesentlich ist femer, daß eine korrodierende Wirkung auch auf Metalle ausgeschlossen ist. Es muß femer gewährleistet sein, daß keine Brandgefahr infolge leichter Entflammbarkeit und Brennbarkeit des Enteisungsmittels gegeben ist. Seine Zusammensetzung sollte für Tier und Mensch physiologisch weitgehend unbedenklich sein. Da das aufgebrachte Mittel auch ins Abwasser gelangen kann, ist die biologische Abbaubarkeit eine weitere Forderung. Das Auftaumittel kann nicht nur in das Abwasser, sondern auch auf landwirtschaftlich genutzten Boden gelangen, dem ebenfalls kein Schaden zugefügt werden sollte. Wesentlich ist ferner, daß eine sehr rasche Auftauung erreicht wird. Von der wirtschaftlichen Seite her ist es schließlich notwendig, daß eine nur geringe Menge an Enteisungsmittel erforderlich ist und daß es wenig kostet.

Im Hinblick auf diese Anforderungen werden im Stand der Technik vor allem Alkalimetall- und Erdalkalimetallchloride sowie Alkalimetall- und Erdalkalimetallsalze von organischen Säuren als vorteilhafte Enteisungsmittel genannt. So werden in US-4 855 071 Alkalimetall- undloder Erdalkalimetallcarboxylate mit 1 bis 4 C-Atomen hergestellt nach einem bestimmten Verfahren, als Enteisungsmittel offenbart, wobei im wesentlichen Calcium/Magnesiumacetat oder Natriumacetat besonders empfohlen wird.

In EP-A-0 483 721 wird ein flüssiges Enteisungsmittel beschrieben, das im wesentlichen aus Wasser, einem Alkalimetall- und/oder Erdalkalimetallacetat und speziellen Korrosionsinhibitoren besteht.

Die bekannten Enteisungsmittel auf der Basis von Alkalimetallchloriden oder Erdalkalimetallchloriden und auf der Basis von Alkalimetall- und/oder Erdalkalimetallcarboxylaten erfüllen zwar zum Teil die obengenannnten Anforderungen, sie lassen jedoch insbesondere in folgender Hinsicht zu wünschen übrig:

Die Wirkung eines Salzes als Enteisungsmittel beruht, wie eingangs bereits erwähnt, auf der Gefrierpunktsemiedrigung von Wasser durch das Salz. Darüber hinaus ist jedoch auch eine hohe Penetrationsgeschwindigkeit und Tau- oder Schmelzkapazität eines Enteisungsmittels von entscheidender Bedeutung. Daraus resultiert nicht nur eine Beschleunigung des Tau- oder Schmelzvorganges beim Tauen und/oder Schmelzen von Eis und/oder Schnee, sondern auch eine Reduzierung der Enteisungsmittelmenge beim Tauen und/oder Schmelzen von Eis und/oder Schnee. Weiterhin sollte sich ein besseres festes Enteisungsmittel als die bereits oben beschriebenen Enteisungsmittel in fester Form dadurch auszeichnen, daß seine Granulatkörner, Kompaktate, Sprühgranulate und/oder Kristalle weitgehend stabil gegen Entmischung der einzelnen Bestandteile, sowie gegen mechanischen Verrieb stabil sind.

Die Aufgabe der vorliegenden Erfindung liegt demnach darin, ein Enteisungsmittel enthaltend Alkalimetall- undloder Erdalkalimetallchloride sowie Alkalimetall- und/oder Erdalkalimetallcarboxylate vorzuschlagen, das eine hohe Wirkung bezüglich Gefrierpunktserniedrigung aufweist, beim Vorgang des Auftauens (Schmelzens) von Eis und Schnee schneller als bisherige Taumittel Eis und/oder Schnee penetriert und langanhaltenden Wiedergefrierschutz bietet. Dieses Enteisungsmittel soll femer stabil gegen Entmischung der Einzelkomponenten und auch mechanisch stabil gegen Verrieb sein, um den durch Transport erzeugten Feinstaubanteil weitgehend zu reduzieren. Das Enteisungsmittel sollte ferner ökologisch und physiologisch unbedenklich sein, keine oder nur geringfügig korrodierende Wirkung auf Metalle und den Belag der Verkehrsflächen ausüben und biologisch gut verträglich sowie gut handhabbar und lagerfähig sein. Ein solches Enteisungsmittel wäre vor allem in all den Fällen vorteilhaft, in denen es auf ein schnelles und auch anhaltendes Auftauen von Eis und/oder Schnee ankommt.

Es wurde überraschenderweise festgestellt, daß ein Kompaktat aus Natriumformiat und Natriumchlorid und einem geeigneten Korrosionsinhibitor in geringen Mengen bei der Anwendung als Enteisungsmittel all die geforderten Eigenschaften aufweist.

Gegenstand der Erfindung ist ein Verfahren zum Schmelzen von Schnee und Eis auf Verkehrsflächen, dadurch gekennzeichnet, daß auf die mit Schnee und Eis bedeckten Verkehrsflächen ein Enteisungsmittel in einer Menge von 5 bis 100 g/m² aufgebracht wird, das 30 bis 70 Gew.-% Natriumformiat, 30 bis 70 Gew.-% Natriumchlorid und 0,1 bis 3 Gew.-% eines Korrosionsinhibitors enthält, und das in Form von festen Partikeln mit einem Durchmesser von 0,3 bis 10 mm oder in wäßriger Lösung mit einem Gehalt von 5 bis 25 Gew.-% an dem Enteisungsmittel zur Anwendung kommt.

Ein weiterer Gegenstand der Erfindung ist ein Enteisungsmittel für Verkehrsflächen, gekennzeichnet durch einen Gehalt an 30 bis 70 Gew.-% Natriumformiat, 30 bis 70 Gew.-% Natriumchlorid und 0,1 bis 3 Gew.-% eines Korrosionsinhibitors, das in Form fester Partikel der Größe 0,3 bis 10 mm vorliegt.

Der Korrosionsinhibitor vermindert die Korrosivität des Enteisungsmittels insbesondere gegenüber Stahl und verzinktem Stahl. Als Korrosionsinhibitor sind die im Stand der Technik als bekannt beschriebenen Korrosionsinhibitoren geeignet. In einer bevorzugten Ausführungsform der Erfindung besteht dieser Korrosionsinhibitor aus Silikaten, Phosphaten, hochmolekularen Copolymeren oder Phosphonaten, oder Mischungen aus zwei oder mehreren dieser Verbindungsklassen. Besonders bevorzugte Beispiele von Korrosionsinhibitoren sind Natriummetasilikat, Trikaliumphosphat, Styrol-Maleinsäure-Copolymere und Aminotris-(methylenphosphonsäure)/Zinksulfat. Besonders bevorzugte Mischungen von Korrosionsinhibitoren enthalten 1,8 bis 2,2 Gew.-% Natriummetasilikat, 0,18 bis 0,22 Gew.-% Trikaliumphosphat, 0,02 bis 0,07 Gew.-% Styrol-Maleinsäure-Copolymere und 0,0001 bis 0,01 Gew.-% einer Mischung aus 1 Gew.-Teil Aminotris-(methylenphosphonsäure) und 5 Gew.-Teilen Zinksulfat.

In einer bevorzugten Ausführungsform der Erfindung enthält das Enteisungsmittel 45 bis 63 Gew.-% Natriumformiat, 37 bis 55 Gew.-% Natriumchlorid und 0,3 bis 2,8 Gew.-% Korrosionsinhibitor. In einer besonders bevorzugten Ausführungsform der Erfindung beträgt das Mengenverhältnis 58 bis 62 Gew.-% Natriumformiat, 38 bis 42 Gew.-% Natriumchlorid und 2 bis 2,5 Gew.-% Korrosionsinhibitor. Die bevorzugten Merkmale für das erfindungsgemäße Enteisungsmittel sind auch bevorzugte Merkmale für das erfindungsgemäße Verfahren.

Die Partikelgröße des Enteisungsmittels beträgt vorzugsweise 0,5 bis 5 mm, insbesondere 1 bis 3 mm.

Das Verfahren zur Enteisung von Verkehrsflächen wird vorzugsweise mit einer Menge an Enteisungsmittel durchgeführt, die zwischen 10 und 80 g/m², insbesondere 15 und 60 g/m² liegt.

Wird im Verfahren eine wäßrige Lösung des Enteisungsmittels verwendet, so beträgt deren Gehalt an Enteisungsmittel vorzugsweise 15 bis 25 Gew.-%, bezogen auf das Gewicht der Lösung.

Das Enteisungsmittel kann in der üblichen Weise, wie beispielsweise durch Streufahrzeuge auf die Verkehrsflächen aufgebracht werden.

Die Erfindung wird nun an Beispielen und Vergleichsbeispielen noch näher erläutert

### Beispiel 1

In einem Kühlraum wurde bei einer Temperatur von - 6°C eine 2 mm dicke Eisschicht erzeugt. Auf die Eisschicht wurden 60 g/m² Partikel eines Kompaktates aus 58 - 62 Gew.-% Natriumformiat und 38 - 42 % Gew.-% Natriumchlorid und 2 - 2,5 Gew.-% des neuartigen, oben beschriebenen Korrosionsinhibitors gleichmäßig aufgebracht. Die Korngröße der Partikel lag zwischen 1 und 3 mm. Nach einer Einwirkzeit von 30 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge

### Ergebnis:

Nach einer Einwirkungszeit von 30 Minuten bei - 6°C waren 22 Gew.-% Eis geschmolzen.

### Beispiel 2

In einem Kühlraum wurde bei einer Temperatur von - 6°C eine 2 mm dicke Eisschicht erzeugt. Auf die Eisschicht wurden 60 g/m² Partikel eines Kompaktates aus 58 - 62 Gew.-% Natriumformiat und 38 - 42 % Gew.-% Natriumchlorid und 2 - 2,5 Gew.-% des neuartigen, oben beschriebenen Korrosionsinhibitors gleichmäßig aufgebracht. Die Korngröße der Partikel lag zwischen 1 und 3 mm. Nach einer Einwirkzeit von 60 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge

### Ergebnis:

Nach einer Einwirkungszeit von 60 Minuten bei - 6°C waren 35 Gew.-% Eis geschmolzen.

### Beispiel 3

In einem Kühlraum wurde bei einer Temperatur von - 6°C eine 2 mm dicke Eisschicht erzeugt. Auf die Eisschicht wurden 42 g/m² Partikel eines Kompaktates aus 58 - 62 Gew.-% Natriumformiat und 38 - 42 % Gew.-% Natriumchlorid und 2 - 2,5 Gew.-% des neuartigen, oben beschriebenen Korrosionsinhibitors angefeuchtet mit 18 g/m² einer 25 Gew.-% wäßrigen Calciumchloridlösung gleichmäßig aufgebracht. Die Korngröße der Partikel lag zwischen 1 und 3 mm. Nach einer Einwirkzeit von 30 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge

### Ergebnis:

Nach einer Einwirkungszeit von 30 Minuten bei - 6°C waren 21 Gew.-% Eis geschmolzen.

### Beispiel 4

In einem Kühlraum wurde bei einer Temperatur von - 6°C eine 2 mm dicke Eisschicht erzeugt. Auf die Eisschicht wurden 42 g/m² Partikel eines Kompaktates aus 58 - 62 Gew.-% Natriumformiat und 38 - 42 Gew.-% Natriumchlorid und 2 - 2,5 Gew.-% des neuartigen, oben beschriebenen Korrosionsinhibitors angefeuchtet mit 18 g/m² einer 25 Gew.-% wäßrigen Calciumchloridlösung gleichmäßig aufgebracht. Die Korngröße der Partikel lag zwischen 1 und 3 mm. Nach einer Einwirkzeit von 60 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge

### Ergebnis:

Nach einer Einwirkungszeit von 60 Minuten bei - 6°C waren 34 Gew.-% Eis geschmolzen.

### Beispiel 5

In einem Kühlraum wurde bei einer Temperatur von - 10°C eine 5 cm dicke Eisschicht erzeugt. Auf die Eisschicht wurden 0,15 g Partikel eines Kompaktates aus 58 - 62 Gew.-% Natriumformiat und 38 - 42 Gew.-% Natriumchlorid und 2 - 2,5 Gew.-% des neuartigen, oben beschriebenen Korrosionsinhibitors gehäuft aufgebracht Die Korngröße der Partikel lag zwischen 1 und 3 mm. Nach einer Einwirkzeit von 120 Minuten bei -10°C wurde die Eindringtiefe der Partikel in das Eis bestimmt.

### Ergebnis:

Nach einer Einwirkungszeit von 120 Minuten bei - 10°C drangen die Partikel 25 mm tief ins Eis ein.

### Beispiel 6

Das Korrosionsverhalten bei (35 ± 1)°C und einer Versuchsdauer von 7 Tagen gegenüber Stahl (C 45) des neuartigen Taumittels bestehend aus 58 - 62 Gew.-% Natriumformiat und 38 - 42 Gew.-% Natriumchlorid und 2 - 2,5 Gew.-% des neuartigen, oben beschriebenen Korrosionsinhibitors wurde in 5%iger wäßriger Lösung nach ASTM F 483 getestet. Die Gesamtoberfläche der Stahlprüfkörper beträgt 25,0 cm².

Ergebnis: Der Abtrag lag bei ± 0,0 mg, was einer Abtragsrate von ± 0,0 mg/cm²/24 h entspricht.

### Beispiel 7

Das Korrosionsverhalten bei (35 ± 1)°C und einer Versuchsdauer von 7 Tagen gegenüber verzinktem Stahl (St 10, LH-Nr. 411510693) des neuartigen Taumittels bestehend aus 58 - 62 Gew.-% Natriumformiat und 38 - 42 Gew.-% Natriumchlorid und 2 - 2,5 Gew.-% des neuartigen, oben beschriebenen Korrosionsinhibitors wurde in 5%iger wäßriger Lösung nach ASTM F 483 getestet. Die Gesamtoberfläche der Stahlprüfkörper beträgt 25,0 cm².

Ergebnis: Der Abtrag lag bei - 0,8 mg, was einer Abtragsrate von ± 0,01 mg/cm²/24 h entspricht.

### Vergleichsbeispiele

### Vergleichsbeispiel 1

In einem Kühlraum wurde bei einer Temperatur von - 6°C eine 2 mm dicke Eisschicht erzeugt. Auf die Eisschicht wurden 60 g/m² Partikel eines Kompaktates aus Natriumformiat gleichmäßig aufgebracht. Die Korngröße der Partikel lag zwischen 1 und 3 mm. Nach einer Einwirkzeit von 30 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge

### Ergebnis:

Nach einer Einwirkungszeit von 30 Minuten bei - 6°C waren 20 Gew.-% Eis geschmolzen.

### Vergleichsbeispiel 2

In einem Kühlraum wurde bei einer Temperatur von - 6°C eine 2 mm dicke Eisschicht erzeugt. Auf die Eisschicht wurden 60 g/m² Partikel eines Kompaktates aus Natriumformiat gleichmäßig aufgebracht. Die Korngröße der Partikel lag zwischen 1 und 3 mm. Nach einer Einwirkzeit von 60 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge.

### Ergebnis:

Nach einer Einwirkungszeit von 60 Minuten bei - 6°C waren 32 Gew.-% Eis geschmolzen.

### Vergleichsbeispiel 3

In einem Kühlraum wurde bei einer Temperatur von - 6°C eine 2 mm dicke Eisschicht erzeugt. Auf die Eisschicht wurden 42 g/m² Partikel eines Kompaktates aus Natriumformiat angefeuchtet mit 18 g/m² einer 25 Gew.-% wäßrigen Calciumchloridlösung gleichmäßig aufgebracht. Die Korngröße der Partikel lag zwischen 1 und 3 mm. Nach einer Einwirkzeit von 30 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge.

### Ergebnis:

Nach einer Einwirkungszeit von 30 Minuten bei - 6°C waren 14 Gew.-% Eis geschmolzen.

### Vergleichsbeispiel 4

In einem Kühlraum wurde bei einer Temperatur von - 6°C eine 2 mm dicke Eisschicht erzeugt. Auf die Eisschicht wurden 42 g/m² Partikel eines Kompaktates aus Natriumformiat angefeuchtet mit 18 g/m² einer 25 Gew.-% wäßrigen Calciumchloridlösung gleichmäßig aufgebracht. Die Korngröße der Partikel lag zwischen 1 und 3 mm. Nach einer Einwirkzeit von 60 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge.

### Ergebnis:

Nach einer Einwirkungszeit von 60 Minuten bei - 6°C waren 28 Gew.-% Eis geschmolzen.

### Vergleichsbeispiel 5

In einem Kühlraum wurde bei einer Temperatur von - 6°C eine 2 mm dicke Eisschicht erzeugt. Auf die Eisschicht wurden 42 g/m² Partikel eines Kompaktates aus Natriumchlorid angefeuchtet mit 18 g/m² einer 25 Gew.-% wäßrigen Calciumchloridlösung gleichmäßig aufgebracht. Die Korngröße der Partikel lag zwischen 1 und 3 mm. Nach einer Einwirkzeit von 30 Minuten bei - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge.

### Ergebnis:

Nach einer Einwirkungszeit von 30 Minuten bei - 6°C waren 15 Gew.-% Eis geschmolzen.

### Vergleichsbeispiel 6

In einem Kühlraum wurde bei einer Temperatur von - 6°C eine 2 mm dicke Eisschicht erzeugt. Auf die Eisschicht wurden 42 g/m² Partikel eines Kompaktates aus Natriumchlorid angefeuchtet mit 18 g/m² einer 25 Gew.-% wäßrigen Calciumchloridlösung gleichmäßig aufgebracht. Die Korngröße der Partikel lag zwischen 1 und 3 mm. Nach einer Einwirkzeit von 60 Minuten bei den angegebenen - 6°C wurde das noch vorhandene, nicht geschmolzene Eis gewogen und das Gewicht dieser Eismenge vom Gewicht der ursprünglichen Eismenge abgezogen und so der Anteil an geschmolzenem Eis, als das gebildete Schmelzwasser, in Gewichtsprozenten festgestellt, bezogen auf die ursprüngliche Eismenge.

### Ergebnis:

Nach einer Einwirkungszeit von 60 Minuten bei - 6°C waren 28 Gew.-% Eis geschmolzen.

### Vergleichsbeispiel 7

In einem Kühlraum wurde bei einer Temperatur von - 10°C eine 5 cm dicke Eisschicht erzeugt. Auf die Eisschicht wurden 0,15 g Partikel eines Kompaktates aus Natriumformiat gehäuft aufgebracht. Die Korngröße der Partikel lag zwischen 1 und 3 mm. Nach einer Einwirkzeit von 120 Minuten bei -10°C wurde die Eindringtiefe der Partikel in das Eis bestimmt.

### Ergebnis:

Nach einer Einwirkungszeit von 120 Minuten bei - 10°C drangen die Partikel 17 mm tief ins Eis ein.

### Vergleichsbeispiel 8

In einem Kühlraum wurde bei einer Temperatur von - 10°C eine 5 cm dicke Eisschicht erzeugt. Auf die Eisschicht wurden 0,15 g Partikel Natriumchlorid gehäuft aufgebracht. Die Korngröße der Partikel lag zwischen 1 und 3 mm. Nach einer Einwirkzeit von 120 Minuten bei -10°C wurde die Eindringtiefe der Partikel in das Eis bestimmt.

### Ergebnis:

Nach einer Einwirkungszeit von 120 Minuten bei - 10°C drangen die Partikel 17 mm tief ins Eis ein.

### Vergleichsbeispiel 9

Das Korrosionsverhalten bei (35 t 1)°C und einer Versuchsdauer von 7 Tagen gegenüber Stahl (C 45) des Taumittels Natriumformiat wurde in 5%iger wäßriger Lösung nach ASTM F 483 getestet. Die Gesamtoberfläche der Stahlprüfkörper beträgt 25,0 cm².

Ergebnis: Der Abtrag lag bei - 18,7 mg, was einer Abtragsrate von - 0,11 mg/cm²/24 h entspricht.

### Vergleichsbeispiel 10

Das Korrosionsverhalten bei (35 ± 1)°C und einer Versuchsdauer von 7 Tagen gegenüber verzinktem Stahl (St 10, LH-Nr. 411510693) des Taumittels Natriumchlorid wurde in 5%iger wäßriger Lösung nach ASTM F 483 getestet. Die Gesamtoberfläche der Stahlprüfkörper beträgt 25,0 cm².

Ergebnis: Der Abtrag lag bei- 27,5 mg, was einer Abtragsrate von - 0,16 mg/cm²/24 h entspricht.

### Vergleichsbeispiel 11

Das Korrosionsverhalten bei (35 ± 1)°C und einer Versuchsdauer von 7 Tagen gegenüber Stahl (C 45) des Taumittels Natriumchlorid wurde in 5%iger wäßriger Lösung nach ASTM F 483 getestet. Die Gesamtoberfläche der Stahlprüfkörper beträgt 25,0 cm².

Ergebnis: Der Abtrag lag bei- 20,4 mg, was einer Abtragsrate von - 0,12 mg/cm²/24 h entspricht.

### Vergleichsbeispiel 12

Das Korrosionsverhalten bei (35 ± 1)°C und einer Versuchsdauer von 7 Tagen gegenüber verzinktem Stahl (St 10, LH-Nr. 411510693) des Taumittels Natriumformiat wurde in 5%iger wäßriger Lösung nach ASTM F 483 getestet. Die Gesamtoberfläche der Stahlprüfkörper beträgt 25,0 cm².

Ergebnis: Der Abtrag lag bei - 69,8 mg, was einer Abtragsrate von - 0,40 mg/cm²/24 h entspricht.

## Patentansprüche

1. Verfahren zum Schmelzen von Schnee und Eis auf Verkehrsflächen, **dadurch gekennzeichnet, daß** auf die mit Schnee und Eis bedeckten Verkehrsflächen ein Enteisungsmittel in einer Menge von 5 bis 100 g/m² aufgebracht wird, das 40 bis 60 Gew.-% Natriumformiat, 40 bis 60 Gew.-% Natriumchlorid und 0,1 bis 2 Gew.-% eines Korrosionsinhibitors enthält, und das in Form von festen Partikeln mit einem Durchmesser von 0,3 bis 10 mm oder in wäßriger Lösung mit einem Gehalt von 5 bis 25 Gew.-% an dem Enteisungsmittel zur Anwendung kommt.

2. Verfahren nach Anspruch 1, **dadurch gekennzeichnet, daß** ein Enteisungsmittel enthaltend 45 bis 63 Gew.-% Natriumformiat, 37 bis 55 Gew.-% Natriumchlorid und 0,3 bis 2,8 Gew.-% Korrosionsinhibitor aufgebracht wird.

3. Verfahren nach Anspruch 1 und/oder 2, **dadurch gekennzeichnet, daß** die Partikelgröße des Enteisungsmittels 0,5 bis 5 mm beträgt.

4. Verfahren nach einem oder mehreren der Ansprüche 1 bis 3, **dadurch gekennzeichnet, daß** die Menge des Enteisungsmittels zwischen 10 und 80 g/m² beträgt.

5. Verfahren nach einem oder mehreren der Ansprüche 1 bis 4, **dadurch gekennzeichnet, daß** bei Verwendung einer wäßrigen Lösung des Enteisungsmittels deren Konzentration 15 bis 25 Gew.-% beträgt.

6. Enteisungsmittel für Verkehrsflächen **gekennzeichnet durch** einen Gehalt an 30 bis 70 Gew.-% Natriumformiat, 30 bis 70 Gew.-% Natriumchlorid und 0,1 bis 3 Gew.-% eines Korrosionsinhibitors, das in Form fester Partikel der Größe 0,3 bis 10 mm vorliegt.

7. Enteisungsmittel für Verkehrsflächen nach Anspruch 6, **gekennzeichnet durch** einen Gehalt an 45 bis 63 Gew.-% Natriumformiat, 37 bis 55 Gew.-% Natriumchlorid und 0,3 bis 2,8 Gew.-% Korrosionsinhibitor, das in Form fester Partikel der Größe 0,5 bis 5 mm vorliegt.

8. Enteisungsmittel für Verkehrsflächen nach Anspruch 6 oder 7, **gekennzeichnet durch** einen Gehalt an 58 bis 62 Gew.-% Natriumformiat, 38 bis 42 Gew.-% Natriumchlorid und 2 bis 2,5 Gew.-% Korrosionsinhibitor, das in Form fester Partikel der Größe 1 bis 3 mm vorliegt.

9. Enteisungsmittel für Verkehrsflächen nach Anspruch 6, 7 oder 8, **dadurch gekennzeichnet, daß** der Korrosionsinhibitor aus 1,8 bis 2,2 Gew.-% Natriummetasilikat, 0,18 bis 0,22 Gew.-% Trikaliumphosphat, 0,02 bis 0,07 Gew.-% Styrol-Maleinsäure-Copolymere und 0,0001 bis 0,01 Gew.-% einer Mischung aus 1 Gew.-Teil Aminotris-(methylenphosphonsäure) und 5 Gew.-Teilen Zinksulfat besteht.

## Claims

1. A method of melting snow and ice on traffic areas, which comprises applying to the traffic areas covered with snow and ice a de-icing composition, in an amount of from 5 to 100 g/m², which comprises from 40 to 60% by weight of sodium formate, from 40 to 60% by weight of sodium chloride and from 0.1 to 2% by weight of a corrosion inhibitor, and which is used in the form of solid particles having a diameter of from 0.3 to 10 mm or in aqueous solution with a content of from 5 to 25% by weight of the de-icing composition.

2. The method as claimed in claim 1, wherein a de-icing composition comprising from 45 to 63% by weight of sodium formate, from 37 to 55% by weight of sodium chloride and from 0.3 to 2.8% by weight of corrosion inhibitor is applied.

3. The method as claimed in claim 1 and/or 2, wherein the particle size of the de-icing composition is from 0.5 to 5 mm.

4. The method as claimed in one or more of claims 1 to 3, wherein the amount of de-icing composition is between 10 and 80 g/m².

5. The method as claimed in one or more of claims 1 to 4, wherein on use of an aqueous solution of the de-icing composition its concentration is from 15 to 25% by weight.

6. A de-icing composition for traffic areas comprising from 30 to 70% by weight of sodium formate, from 30 to 70% by weight of sodium chloride and from 0.1 to 3% by weight of a corrosion inhibitor and in the form of solid particles from 0.3 to 10 mm in size.

7. The de-icing composition for traffic areas as claimed in claim 6, comprising from 45 to 63% by weight of sodium formate, from 37 to 55% by weight of sodium chloride and from 0.3 to 2.8% by weight of corrosion inhibitor and in the form of solid particles from 0.5 to 5 mm in size.

8. The de-icing composition for traffic areas as claimed in claim 6 or 7, comprising from 58 to 62% by weight of sodium formate, from 38 to 42% by weight of sodium chloride and from 2 to 2.5% by weight of corrosion inhibitor and in the form of solid particles from 1 to 3 mm in size.

9. The de-icing composition for traffic areas as claimed in claim 6, 7 or 8, wherein the corrosion inhibitor consists of from 1.8 to 2.2% by weight of sodium metasilicate, from 0.18 to 0.22% by weight of tripotassium phosphate, from 0.02 to 0.07% by weight of styrene-maleic acid copolymers and from 0.0001 to 0.01% by weight of a mixture of 1 part by weight of aminotris(methylenephosphonic acid) and 5 parts by weight of zinc sulfate.

## Revendications

1. Procédé pour faire fondre la neige et la glace sur des surfaces destinées à la circulation, **caractérisé en ce qu'**on applique sur les surfaces destinées à la circulation, recouvertes de neige et de glace, un agent de déverglaçage en une quantité de 5 à 100 g/m², qui contient 40 à 60 % en poids de formiate de sodium, 40 à 60 % en poids de chlorure de sodium et 0,1 à 2 % en poids d'un inhibiteur de corrosion, et qui est utilisé sous forme de particules solides ayant un diamètre de 0,3 à 10 mm, ou en solution aqueuse contenant 5 à 25 % en poids de l'agent de déverglaçage.

2. Procédé selon la revendication 1, **caractérisé en ce qu'**on applique un agent de déverglaçage contenant 45 à 63 % en poids de formiate de sodium, 37 à 55 % en poids de chlorure de sodium et 0,3 à 2,8 % en poids d'un inhibiteur de corrosion.

3. Procédé selon les revendications 1 et/ou 2, **carac-térisé en ce que** la granulométrie des particules de l'agent de déverglaçage est de 0,5 à 5 mm.

4. Procédé selon l'une ou plusieurs des revendications 1 à 3, **caractérisé en ce que** la quantité de l'agent de déverglaçage est de 10 à 80 g/m².

5. Procédé selon l'une ou plusieurs des revendications 1 à 4, **caractérisé en ce que**, quand on utilise une solution aqueuse de l'agent de déverglaçage, la concentration de ce dernier est de 15 à 25 % en poids.

6. Agent de déverglaçage pour surfaces destinées à la circulation, **caractérisé en ce qu'**il contient 30 à 70 % en poids de formiate de sodium, 30 à 70 % en poids de chlorure de sodium et 0,1 à 3 % en poids d'un inhibiteur de corrosion qui se présente sous forme de particules solides ayant une granulométrie de 0,3 à 10 mm.

7. Agent de déverglaçage pour surfaces destinées à la circulation selon la revendication 6, **caractérisé en ce qu'**il contient 45 à 63 % en poids de formiate de sodium, 37 à 55 % en poids de chlorure de sodium et 0,3 à 2,8 % en poids d'un inhibiteur de corrosion, qui se présente sous forme de particules solides ayant une granulométrie de 0,5 à 5 mm.

8. Agent de déverglaçage pour surfaces destinées à la circulation selon la revendication 6 ou 7, **caractérisé en ce qu'**il contient 58 à 62 % en poids de formiate de sodium, 38 à 42 % en poids de chlorure de sodium et 2 à 2,5 % en poids d'un inhibiteur de corrosion, qui se présente sous forme de particules solides ayant une granulométrie de 1 à 3 mm.

9. Agent de déverglaçage pour surfaces destinées à la circulation selon la revendication 6, 7 ou 8, **caractérisé en ce que** l'inhibiteur de corrosion est constitué de 1,8 à 2,2 % en poids de métasilicate de sodium, de 0,18 à 0,22 % en poids de phosphate tricalcique, de 0,02 à 0,07 % en poids de copolymères styrène/acide maléique et de 0,0001 à 0,01 % en poids d'un mélange d'une partie en poids d'acide aminotris-(méthylènephosphonique) et de 5 parties en poids de sulfate de zinc.
